# EUROPEAN PATENT SPECIFICATION

(11) **EP 3 979 074 B1**
(45) Date of publication and mention of the grant of the patent: **13.08.2025**
(21) Application number: 19931260.4
(22) Date of filing: 30.05.2019
(51) Int. Cl.: H04L 9/32, H04L 9/40, H04L 9/00, H04L 67/141, G06F 9/38, G06Q 20/38

(54) **METHOD AND APPARATUS FOR RELAYING DIGITAL CERTIFICATE PROCESSING TASK, MEDIUM, AND PROGRAM PRODUCT**
VERFAHREN UND VORRICHTUNG ZUR WEITERLEITUNG EINER AUFGABE ZUR VERARBEITUNG DIGITALER ZERTIFIKATE, MEDIUM UND PROGRAMMPRODUKT
PROCÉDÉ ET APPAREIL POUR RELAYER UNE TÂCHE DE TRAITEMENT DE CERTIFICAT NUMÉRIQUE, SUPPORT ET PRODUIT DE PROGRAMME

(43) Date of publication of application: 06.04.2022
(73) Proprietor: ANTPOOL TECHNOLOGIES LIMITED, Wanchai, Hong Kong (CN)
(72) Inventor: ZHANG, Jinzhu, Beijing 100192 (CN)
(74) Representative: Goddar, Heinz J.
(86) International application number: PCT/CN2019/089195
(87) International publication number: WO 2020/237557

(56) References cited:
- CN-A- 101 202 629
- CN-A- 102 571 568
- CN-A- 102 571 568
- CN-A- 104 714 783
- CN-A- 104 717 300
- CN-A- 106 296 196
- CN-A- 109 118 220
- US-A1- 2005 278 534
- US-A1- 2014 032 344

## Description

### TECHNICAL FIELD

The present disclosure generally relates to the digital certificate processing technology field and, more particularly, to a method for relaying a digital certificate processing tasks, an apparatus for relaying the digital certificate processing task, and a computer program product.

### BACKGROUND

In the digital certificate processing technology field, digital certificate processing apparatuses are generally deployed on the site of the apparatuses. The digital certificate processing apparatuses establish one-to-one connections with mining pools. As such, the digital certificate processing apparatuses obtain digital certificate processing tasks from the mining pools through the connections and execute the tasks. However, the connections between the digital certificate processing apparatuses and the mining pools are not flexible and cannot satisfy different needs.

US 2005/0278534 A1 discloses a method, for validating certificates. A certificate validation service receives a certificate validation request for a target certificate from a client, thereby allowing the client to offload certificate validation tasks into an online certificate validation service that is accessible and sharable by multiple components within a data processing system. In response to a determination that the target certificate is valid or invalid, the certificate validation service sends a certificate validation response with an indicating status value that the target certificate is valid or invalid. The certificate validation service is able to cache information about previously validated certificates and the associated certificate chains, thereby enhancing the efficiency of the service. Different certificate validation policies may be applied against target certificates based upon information associated with the target certificates.

CN 102571568 A discloses a method and device for processing a task. The method comprises the following steps: receiving task message by at least one component in a distributed message queue of a multi-channel pipeline processing system, wherein a connection pond is arranged in the multi-channel distributed pipeline processing system and used for storing message on the network connection of all components in the distributed message queue; selecting one effective network connection from the connection pond according to the message on the network connection; sending the task information by using the selected effective network connection, and processing the task requested by the task message. Due to the adoption of the method and the device, the cluster processing capability decline caused by the node failure in the present distributed message queue system can be avoided, and the cluster processing capability of the multi-channel pipeline processing system is effectively guaranteed.

### SUMMARY

The invention is defined by the subject matter of the independent claims. Advantageous embodiments are subject to the dependent claims. Relaying the digital certificate processing tasks by establishing the first connections with the digital certification processing apparatuses and the at least one second connection with the at least one mining pool, the connection between the digital certificate processing apparatuses and the mining pool(s) is realized through a relay connection. The relay connection can be established as needed. Thus, the connection between the digital certificate processing apparatuses and the mining pool(s) is more flexible and can satisfy different needs. Further advantages of the claimed invention will become more apparent from the following description.

### BRIEF DESCRIPTION OF THE DRAWINGS

One or more embodiments are exemplarily described by the accompanying drawings. These exemplary descriptions and the accompanying drawings do not constitute a limitation on embodiments of the present disclosure. Elements with same reference numerals in the accompanying drawings are shown as similar elements. The accompanying drawings do not constitute a ratio limitation, and among them:
FIG. 1 is a schematic flowchart of a method for relaying a digital certificate processing task;
FIG. 2 is a schematic block diagram of an apparatus for relaying a digital certificate processing task;
FIG. 3 is a schematic block diagram of an apparatus for relaying a digital certificate processing task;
FIG. 4 is a schematic block diagram of an apparatus for relaying a digital certificate processing task;
FIG. 5 is a schematic block diagram of an apparatus for relaying a digital certificate processing task;
FIG. 6 is a schematic flowchart of a method for relaying a digital certificate processing task according to an embodiment not encompassed by the literal wording of the claims but useful for the understanding of the invention;
FIG. 7 is a schematic block diagram of a digital certificate processing apparatus according to an embodiment not encompassed by the literal wording of the claims but useful for the understanding of the invention; and
FIG. 8 is a schematic block diagram of a digital certificate processing apparatus according to an embodiment not encompassed by the literal wording of the claims but useful for the understanding of the invention.

### DETAILED DESCRIPTION OF EMBODIMENTS

To understand the features and technical content of embodiments of the present disclosure with more details, implementation of embodiments of the present disclosure is described in detail below in connection with the accompanying drawings. The accompanying drawings are for reference only and are not used to limit embodiments of the present disclosure. In the following technical description, to facilitate explanation, a number of details are used to provide a sufficient understanding of the disclosed embodiments. However, without these details, one or more embodiments can still be implemented. In other cases, well-known structures and devices may be simplified for a demonstration to simplify the accompanying drawings.

With reference to the accompanying drawings, a method for relaying a digital certificate processing task is described below according to first aspect embodiments of the present disclosure.

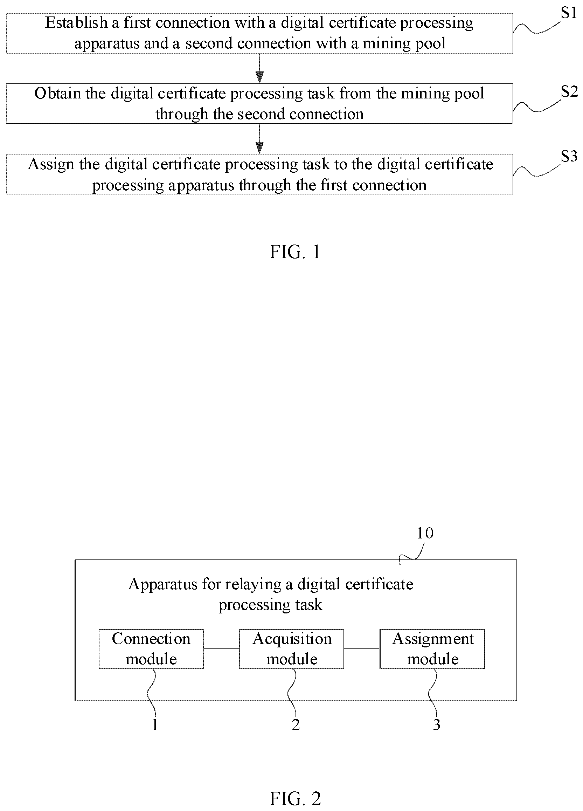

FIG. 1 is a schematic flowchart of a method for relaying a digital certificate processing task, which may be one of a plurality of digital certificate processing task to be relayed in accordance with the embodiments of the invention. As shown in FIG. 1, the method includes step S1, step S2, and step S3.

At step S1, a first connection with a digital certificate processing apparatus and a second connection with a mining pool are established.

In embodiments of the present disclosure, a relay connection mechanism is added between the digital certificate processing apparatus(es) and the mining pool(s). The connection between the digital certificate processing apparatus(es) and the mining pool(s) is realized through the relay connection mechanism. Specifically, a relay connection may be established through a digital certificate processing analog apparatus or a cloud server. For example, the cloud server may establish connections with the digital certificate processing apparatus(es) and the mining pool(s), respectively. The digital certificate processing analog apparatus may have a function similar to the digital certificate processing apparatus, that is, obtaining a digital certificate processing task from the mining pool. In addition, the digital certificate processing analog apparatus may also have a function of assigning digital certificate processing tasks.

The first connections and the second connections can be established as needed. For example, one or more first connections may be established with one or more digital certificate processing apparatuses, and one or more second connections may be established with one or more mining pools. Through the relay connection, the connection between the digital certificate processing apparatus(es) and the mining pool(s) may be more flexible to meet different needs.

At step S2, the digital certificate processing task is obtained from the mining pool through the second connection.

At step S3, the digital certificate processing task is assigned to the digital certificate processing apparatus through the first connection.

For example, the cloud server may establish the first connection with the digital certificate processing apparatus and the second connection with the mining pool, obtain the digital certificate processing task from the mining pool, and assign the obtained digital certificate processing task to the digital certificate processing apparatus that is connected to the cloud server. Thus, the digital certificate processing apparatus can execute the corresponding digital certificate processing task, so as to realize the acquisition of the digital certificate processing task.

According to the method for relaying the digital certificate processing task described in connection with FIG. 1, the first connection is established with the digital certificate processing apparatus, the second connection is established with the mining pool, and the digital certificate processing task is obtained through the first connection and the second connection. That is, the connection between the digital certificate processing apparatus and the mining pool is realized through the relay connection. The relay connection can be established as needed. Thus, the connection between the digital certificate processing apparatus and the mining pool is more flexible to meet different needs.

In some cases, the digital certificate processing apparatuses may be deployed at the digital certificate processing apparatus site. The digital certificate processing apparatus may establish a one-to-one connection with the mining pool, obtain tasks from the mining pool connected to the digital certificate processing apparatus, and executes the task. Since different digital certificate processing apparatus need to establish different connections to the mining pools, if a large number of digital certificate processing apparatuses are deployed on the apparatus site, a large number of connections may need to be established, which imposes a high requirement on network bandwidth. The large number of connections may likely cause the network to be instable. Network instability may cause the digital certificate processing apparatus unable to maintain an efficient operation, and even affect the stability of the mining pool.

For the problems above and the case with a plurality of digital certificate processing apparatuses connected to one or more mining pools, in embodiments of the present disclosure, a plurality of first connections are established with the plurality of digital certificate processing apparatuses, and one or more second connections are established with the one or more mining pools. The number of the second connections may be smaller than the number of first connections. That is, compared to N connections established between N digital certificate processing apparatuses and the mining pool, N is a natural number ≥2, through the relay connection, the number of network connections between the digital certificate processing apparatuses and the mining pool can be reduced. The digital certificate processing tasks can be obtained by maintaining fewer connections between the digital certificate processing apparatuses and the mining pool(s). Thus, the bandwidth may be saved, the demand for the bandwidth of the network connections may be reduced. That is, even if the network stability is poor, the digital certificate processing apparatuses may be ensured to operate effectively.

For example, if fifty digital certificate processing apparatuses are deployed on the apparatus site, and the cloud server can establish the first connections with the fifty digital certificate processing apparatuses, respectively. The number of the first connections is fifty. The cloud server can establish the second connections with the mining pools. The number of the second connections may be twenty or ten or less. The cloud server may obtain the digital certificate processing tasks from the mining pools through the second connections and assign the digital certificate processing tasks to the digital certificate processing apparatuses through the first connections. Through the relay connection of the cloud server, fewer network connections may be required between the digital certificate processing apparatuses and the mining pools to obtain the digital certificate processing tasks and ensure the digital certificate processing apparatuses operate effectively. Thus, the bandwidth requirements for external networks may be reduced, and the bandwidth may be saved.

Further, in some embodiments, before the digital certificate processing task is assigned to the digital certificate processing apparatuses, the content and the difficulty level of the digital certificate processing task may be divided according to the computation power of each digital certificate processing apparatus. The content and the difficulty level of the digital certificate processing task may be divided to be compliant with the requirement of the computation power of the digital certificate processing apparatus. Then, the adjusted digital certificate processing task may be assigned to a corresponding digital certificate processing apparatus. The digital certificate processing apparatus may execute the received tasks.

For example, in embodiments of the present disclosure, the digital certificate processing apparatuses may be managed through the relay connection mechanism. The digital certificate processing analog apparatus may be taken as an example to realize the relay connection. Specifically, the digital certificate processing analog apparatus may establish the second connection with the mining pool by simulating the digital certificate processing apparatus and obtain the digital certificate processing task from the mining pool. The digital certificate processing apparatus on the apparatus site may be connected to the digital certificate processing analog apparatus and obtain the digital certificate processing task from the digital certificate processing analog apparatus. The digital certificate processing analog apparatus may assign the digital certificate processing tasks obtained from the mining pools to different digital certificate processing apparatuses and identify the content and the difficulty level of the digital certificate processing tasks. Thus, different digital certificate processing apparatuses may not perform repeated computations and may maintain an efficient operation.

Specifically, after obtaining the digital certificate processing task from the mining pool, the apparatus for relaying the digital certificate processing task may divide the digital certificate processing task into tasks of a lower difficulty level and assign the tasks to the digital certificate processing apparatuses. To divide the digital certificate processing task into the digital certificate processing tasks of a suitable difficulty level, in some embodiments, the computation power of each digital certificate processing apparatus may be determined according to the theoretical difficulty level of the digital certificate processing task assigned to each digital certificate processing apparatus and the time interval for receiving the answer to the corresponding task. The apparatus for relaying the digital certificate processing task may divide the difficulty level of the digital certificate processing task according to the computation power of each digital certificate processing apparatus and assign the task after the difficulty level is divided to the corresponding digital certificate processing apparatus to maintain the efficient operation.

The theoretical difficulty level of the digital certificate processing task may be determined according to the rated computation power of the digital certificate processing apparatus. For example, ten 10T digital certificate processing apparatuses may be connected to the same mining pool through the apparatus for relaying the digital certificate tasks and have the computation power of 100T for the mining pool. The theoretical difficulty level of the task issued by the mining pool may be the difficulty level of the 100T digital certificate processing apparatuses. When the apparatus for relaying the digital certificate task receives the task, the apparatus for relaying the digital certificate task will divide the task into the difficulty level required by the 10T digital certificate processing apparatus and assign the divided tasks to the ten digital certificate processing apparatuses. If the computation power of a certain digital certificate processing apparatus suddenly drops to 5T due to a certain reason, for example, a failure of a computation power board, the time for the digital certificate processing apparatus to compute the 10T task may increase accordingly. When receiving the change, the apparatus for relaying the digital certificate tasks may adjust the difficulty level of the subsequent assigned digital certificate processing task accordingly for the digital certificate processing apparatus. For example, the apparatus for relaying the digital certificate tasks may only assign the content of 5T difficulty level to the digital certificate processing apparatus.

In short, in embodiments of the present disclosure, through the relay connection, for example, the relay connection apparatuses, such as the digital certificate processing analog apparatus or the cloud server, may be deployed to the internal network of the apparatus site. Thus, only a small amount of the connections with the mining pool may be required to ensure the digital the efficient operation of the digital certificate processing apparatuses, lower the requirements for the network bandwidth, save the bandwidth, and improve the operation stability of the digital certificate processing apparatus.

In other cases not falling under the literal wording of the claims but useful for understanding the invention, the digital certificate processing apparatus may obtain the digital certificate processing task from the mining pool and then executes the digital certificate processing task. Generally, the digital certificate processing apparatus may only interact with one mining pool. The digital certificate processing apparatus may establish a long connection with the mining pool, continuously obtain the digital certificate task from the mining pool through the long connection, and execute the task. However, the digital certificate processing apparatus may obtain a digital certificate processing task from a mining pool for one user to use. If the computation power requirement of the user is low, the utilization rate of the digital certificate processing apparatus may be low. The rated computation power of the digital certificate processing apparatus may be fixed and unable to meet the user needs of the flexible computation power.

For the above-mentioned problems, a solution includes establishing the first connection with a digital certificate processing apparatus based on establishing the relay connection and establishing the second connection with the plurality of mining pools according to the computation power of the digital certificate processing apparatus. The number of the second connections may be greater than the number of the first connections. That is, the digital certificate processing apparatus may obtain the digital certificate processing tasks from the plurality of mining pools and assign different digital certificate processing tasks to the digital certificate processing apparatus. It is equivalent to divide the computation power of the digital certificate processing apparatus into a plurality of small granularities for use by different users to improve the utilization rate of the digital certificate processing apparatus.

Specifically, the cloud server may be taken as an example to realize the relay connection. The cloud server may establish connections with the plurality of mining pools and a digital certificate processing apparatus according to a communication protocol between the mining pools and the digital certificate processing apparatus. That is, one digital certificate processing apparatus may be connected to the plurality of mining pools. The cloud server may be connected to different mining pools according to the user needs, obtain the digital certificate processing tasks from different mining pools, and issue different digital certificate processing tasks to the digital certificate processing apparatus after re-arranging the tasks according to different user needs. The digital certificate processing apparatus may perform corresponding tasks, which is equivalent to divide the computation power of the digital certificate processing apparatus into a plurality of small granularities, such that the digital certificate processing apparatus may be used by different users. Thus, the utilization rate of the digital certificate processing apparatus may be increased, and the digital certificate processing apparatus may meet the user needs of the flexible computation power.

In general, the solution include establishing the first connection with the digital certificate processing apparatus and the second connections with the mining pools. That is, the digital certificate processing tasks may be obtained through the relay connection. The digital certificate processing apparatus may be connected to the plurality of mining pools to obtain different digital certificate processing tasks, which is equivalent to dividing the computation power of the digital certificate processing apparatus into the plurality of small granularities for use by different users. As such, the utilization rate of the digital certificate processing apparatus may be increased to meet different needs of the user.

The apparatus for relaying the digital certificate processing tasks according to s embodiments of the present disclosure is described below with reference to the accompanying drawings.

FIG. 2 is a schematic block diagram of an apparatus 10 for relaying a digital certificate processing task according to embodiments of the present disclosure. As shown in FIG. 2, the apparatus 10 includes a connection module 1, an acquisition module 2, and an assignment module 3.

The connection module 1 is configured to establish the first connection(s) with the digital certificate processing apparatus(es) and the second connection(s) with the mining pool(s). The acquisition module 2 is configured to obtain a digital certificate processing task from a mining pool through a second connection. The assignment module 3 is configured to assign the digital certificate processing task to a digital certificate processing apparatus through a first connection.

**In** some embodiments, the first connection and the second connection are established as needed. For example, the first connections are established with one or more digital certificate processing apparatuses, and the second connections are established with one or more mining pools. Through relay connection, the connection between the digital certificate processing apparatus and the mining pool may be more flexible to meet different needs.

The apparatus 10 for relaying the digital certificate processing tasks may include one of a digital certificate processing analog apparatus and a cloud server, which is equivalent to adding a relay connection apparatus between the digital certificate processing apparatus and the mining pool. The digital certificate processing task is obtained through the relay connection mechanism. For example, the cloud server may establish the connections with the digital certificate processing apparatus and the mining pool, obtain the digital certificate processing tasks from the mining pool, and assign the obtained digital certificate processing tasks to the digital certificate processing apparatus that is connected to the cloud server. Thus, the digital certificate processing apparatus may perform the corresponding digital certificate processing task to realize the acquisition of the digital certificate processing task.

The connection module 1 may be configured to establish the first connection with the digital certificate processing apparatus and the second connection with the mining pool. That is, the digital certificate processing apparatus may be connected to the mining pool through the relay connection of the connection module 1. Thus, the connection between the digital certificate processing apparatus and the mining pool may be more flexible to meet different needs.

In the embodiments of the invention, when the plurality of digital certificate processing apparatuses are connected to one mining pool, the connection module 1 is further configured to establish a plurality of first connections with the plurality of digital certificate apparatuses and the second connection with one mining pool when establishing the connections. The number of the second connection is less than the number of the first connections. That is, compared to N connections established between N digital certificate processing apparatuses and the mining pool, N being a natural number ≥2, through the relay connection, the number of the network connections between the digital certificate processing apparatuses and the mining pool may be reduced, and the requirement for the bandwidth of the network connections may be lowered. As such, the bandwidth may be saved. That is, even the stability of the network is poor, the digital certificate processing apparatuses may be ensured to operate efficiently.

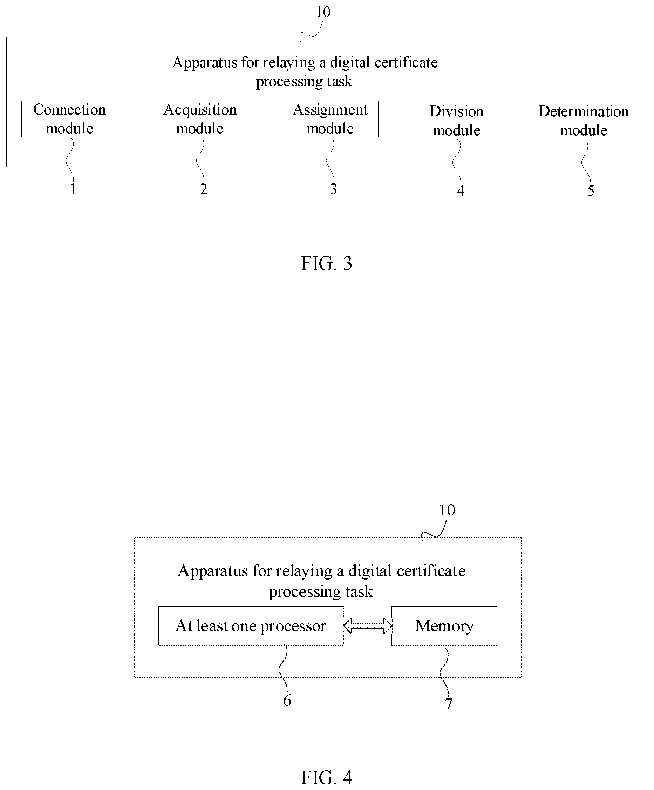

Further, in some embodiments, as shown in FIG. 3, the apparatus 10 further includes a division module 4. The division module 4 may be configured to divide the content and the difficulty level of the digital certificate processing task according to the computation power of each digital certificate processing apparatus. The content and the difficulty level of the digital certificate processing task may be divided to be compliant with the requirement of the computation power of the digital certificate processing apparatus. Then, the assignment module 3 may be configured to distribute the digital certificate processing task after the difficulty level is divided into the corresponding digital certificate processing apparatus. The digital certificate processing apparatus may perform the received task.

As shown in FIG. 3, the apparatus 10 further includes a determination module 5. The determination module 5 may be configured to determine, according to the theoretical difficulty level of the digital certificate processing task assigned to each digital certificate processing apparatus and the time interval of receiving the answer to the corresponding task, the computation power of each digital certificate processing apparatus. Then, the division module 4 may be configured to divide the content and the difficulty level of the digital certificate processing task according to the computation power of each digital certificate processing apparatus. The assignment module 3 may be configured to assign the task after the difficulty level is divided to the corresponding digital certificate processing apparatus to ensure to process the task more efficiently.

**In** some other embodiments, the digital certificate processing apparatus can only be connected to one mining pool. Thus, the utilization rate of the digital certificate processing apparatus may be low. The connection module 1 may be further configured to establish the first connection with one digital certificate processing apparatus and the second connections with the plurality of mining pools according to the computation power of the digital certificate processing apparatus when establishing the connection. The number of the second connections may be greater than the number of the first connections. That is, the digital certificate processing apparatus may be connected to the plurality of mining pools through the apparatus 10 to obtain the digital certificate processing tasks from different mining pools. It is equivalent to dividing the computation power of the digital certificate processing apparatus into the plurality of small granularities, such that the digital certificate processing apparatus can be used by different users. The utilization rate of digital certificate processing apparatus may be improved, and the digital certificate processing apparatus may meet the user requirement of the flexible computation power.

In summary, with the apparatus 10 of embodiments of the present disclosure, the number of the connections with the mining pools may be reduced, and the required bandwidth of the connection network may be saved. The digital certificate processing apparatus may be also connected to the plurality of mining pools, which improves the utilization rate of the digital certificate processing apparatus to meet different user needs.

As shown in FIG. 4, the apparatus 10 of embodiments of the present disclosure includes at least one processor 6 and a memory 7 communicatively connected to the at least one processor 6. The memory 7 may store an instruction that is executable by the at least one processor 6 that, when the instruction is executed by the at least one processor 6, causes the at least one processor 6 to execute the method of the above embodiments.

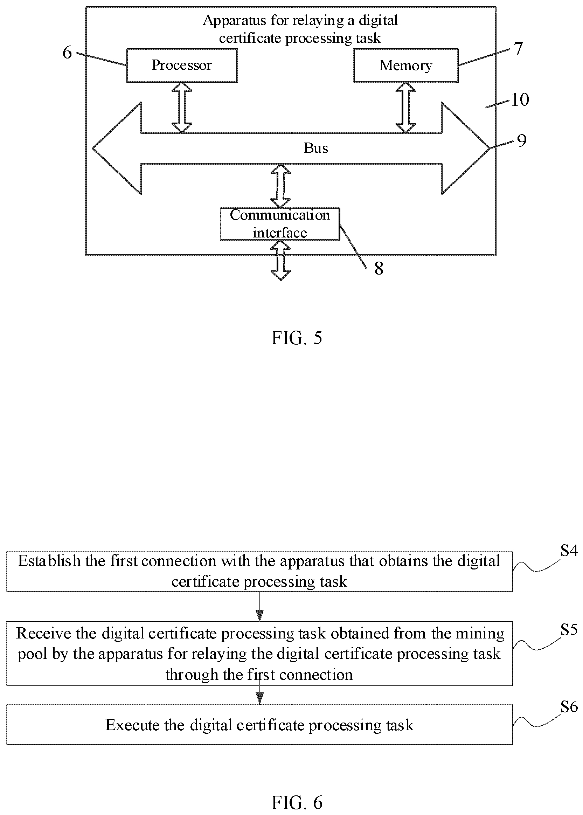

As shown in FIG. 5, one processor 6 is taken as an example. The apparatus further includes a memory 7, a communication interface 8, and a bus 9. The processor 6, the communication interface 8, and the memory 7 communicate with each other through the bus 9. The communication interface 8 is configured to transmit information. The processor 6 may call logic instructions in the memory 7 to execute the method for relaying digital certificate processing tasks in the above embodiments.

In addition, the logic instruction of the memory 7 may be realized through a form of a software functional unit and may be sold or applied as an individual product. The logic instruction 7 may be stored in the computer-readable storage medium.

As a computer-readable storage medium, the memory 7 may be configured to store software programs and computer-executable programs, such as program instructions/modules corresponding to the methods of embodiments of the present disclosure. The processor 6 may execute functional applications and data processing by running the software programs, instructions, and modules stored in the memory 7. That is, the method of the above method embodiments may be implemented.

The memory 7 may include a program storage area and a data storage area. The program storage area may store an operating system and an application program required by at least one function. The data storage area may store data created according to the use of the terminal apparatus. In addition, the memory 7 may further include a high-speed random access memory and a non-volatile memory.

FIG. 6 is a schematic flowchart of a method for relaying a digital certificate processing task according to embodiments of the present disclosure that are not encompassed by the literal wording of the claims but useful for the understanding of the invention. As shown in FIG. 6, the method of the present disclosure includes step S4, step S5, and step S6.

At step S4, the first connection is established with the apparatus that obtains the digital certificate processing task.

At step S5, the digital certificate processing task obtained from the mining pool by the apparatus for relaying the digital certificate processing task is received through the first connection.

At step S6, the digital certificate processing task is executed.

In some embodiments, the apparatus for relaying the digital certificate processing tasks may include the apparatus that realizes the relay connection between the digital certificate processing apparatus(es) and the mining pool(s). In some embodiments, the apparatus may include the digital certificate processing analog apparatus or the cloud server. For example, the digital certificate processing analog apparatus or the cloud server may simulate the digital certificate processing apparatus to establish the first connection with the digital certificate processing apparatus and the second connection with the mining pool. The digital certificate processing analogy apparatus or the cloud server may obtain the digital certificate processing tasks from the mining pool and assign the digital certificate processing tasks to the digital certificate processing apparatuses through the first connection.

The first connection(s) and the second connection(s) may be established as needed. For example, the apparatus establishes the plurality of first connections with the plurality of digital certificate processing apparatuses and the second connection with one mining pool. The number of the second connections is smaller than the number of the first connections, which may reduce the bandwidth and lower the requirement of the bandwidth of the network connection.

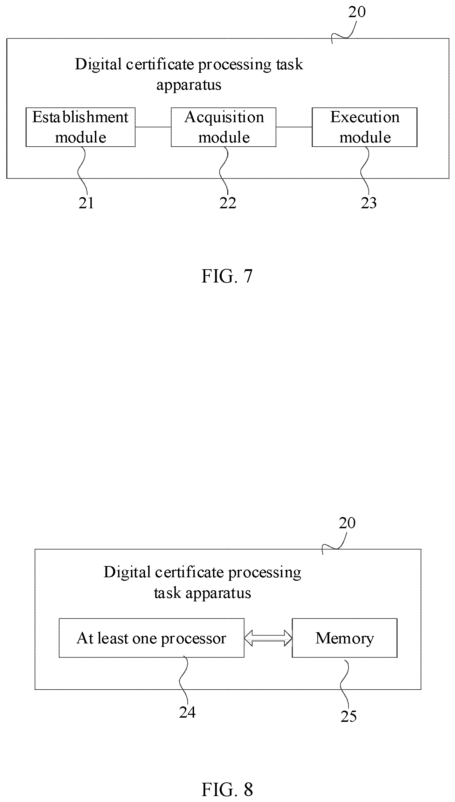

FIG. 7 is a schematic block diagram of a digital certificate processing apparatus 20 that are not encompassed by the literal wording of the claims but useful for the understanding of the invention. As shown in FIG. 7, the digital certificate processing apparatus 20 includes an establishment module 21, an acquisition module 22, and an execution module 23.

The establishment module 21 may be configured to establish the first connection with the device for relaying the digital certificate processing task. The acquisition module 22 may be configured to receive the digital certificate processing task obtained from the mining pool by the apparatus for relaying the digital certificate processing task through the first connection. The execution module 23 may be configured to execute the received digital certificate processing task. That is, the apparatus for relaying the digital certificate processing task may establish the connections with the digital certificate processing apparatus 20 and the mining pool, which is equivalent to establishing the relay connection between the digital certificate processing apparatus 20 and the mining pool. The digital certificate processing apparatus may obtain the digital certificate processing task through the relay connection. The relay connection may be established as needed, which is more flexible and meets different needs.

The apparatus for relaying the digital certificate processing task may include the apparatus that realizes the relay connection between the digital certificate processing apparatus and the mining pool. In some embodiments, the apparatus for relaying the digital certificate processing task may include the digital certificate processing analog apparatus or the cloud server.

The digital certificate processing apparatus 20 may perform data processing related to the digital certificate. The digital certificate may be obtained through the data processing. Further, when the digital certificate is related to or embodied as encrypted currency, the digital certificate processing apparatus 20 may include a blockchain computation apparatus. The digital currency may be an encrypted currency based on the blockchain technology.

The digital certificate processing apparatus 20 may obtain the digital certificate processing task by establishing the relay connection with the apparatus for relaying the digital certificate processing task. The relay connection may be established as needed. Thus, the connection between the digital certificate processing apparatus and the mining pool may be more flexible to meet different needs.

FIG. 8 is a schematic block diagram of a digital certificate processing apparatus 20 according to an embodiment not encompassed by the literal wording of the claims but useful for the understanding of the invention. The digital certificate processing apparatus 20 includes at least one processor 24 and a memory 25 communicatively connected to the at least one processor.

The memory 25 may store instructions executable by at least one processor 24 that, when the instructions are executed by the at least one processor 24, causes the at least one processor 24 to execute the method for relaying the digital certificate processing tasks described in connection with FIG. 7.

Embodiments of the present disclosure further provide a computer program product. The computer program product includes a computer program stored on the computer-readable storage medium. The computer program includes program instructions that, when the program instructions are executed by a computer, causes the computer to execute the above the method for relaying the digital certificate processing tasks.

The above-mentioned computer-readable storage medium may include a transitory computer-readable storage medium or a non-transitory computer-readable storage medium.

The technical solutions of embodiments of the present disclosure may be embodied in the form of a software product. The computer software product may be stored in a storage medium and includes one or more instructions to enable a computer apparatus (e.g., a personal computer, a server, a network apparatus, etc.) to execute all or some steps of the method described in embodiments of the present disclosure. The above-mentioned storage medium may include a non-transitory storage medium, including a plurality of media that can store the program codes, such as U disk, mobile hard disk, read-only memory (ROM), random access memory (RAM), magnetic disks, or optical disks, etc. The storage medium may also include a transitory storage medium.

The various aspects, implementations, realizations, or features in the described embodiments may be used alone or in any combination. Various aspects in the described embodiments may be implemented by software, hardware, or a combination of software and hardware. The described embodiments may also be embodied by a computer-readable medium storing the computer-readable codes. The computer-readable codes may include instructions executable by at least one computation device. The computer-readable medium may be associated with any data storage device capable of storing data. The data may be read by a computer system. The computer-readable medium used as an example may include read-only memory, random access memory, compact disc read-only memory (CD-ROM), hard disk drive (HDD), digital video disc (DVD), magnetic tape, optical data storage device, etc. The computer-readable medium may also be distributed in a computer system connected through the network connection so that the computer-readable codes can be stored and executed in a distributed manner.

## Claims

1. A method performed by an apparatus for relaying digital certificate processing tasks comprising:
establishing a plurality of first connections with a plurality of digital certificate processing apparatuses (20) and at least one second connection with at least one mining pool;
obtaining a plurality of digital certificate processing tasks from the at least one mining pool through the at least one second connection; and
assigning the obtained digital certificate processing tasks to the plurality of digital certificate processing apparatuses (20) through the first connections;
wherein the number of the at least one second connection is smaller than the number of the first connections.

2. The method of claim 1, further comprising, before assigning the digital certificate processing tasks to the plurality of digital certificate processing apparatuses (20) through the first connections:
identifying a content and a difficulty level of a given digital certificate processing task according to computation power of each of the plurality digital certificate processing apparatuses (20).

3. The method of claim 2, further comprising:
determining the computation power of each of the plurality of digital certificate processing apparatuses (20) according to a theoretical difficulty level of a given digital certificate processing task to be assigned to the plurality of digital certificate processing apparatuses (20) and a time interval of receiving answers to the given digital certificate processing task.

4. The method of claim 1, wherein establishing the first connections with the plurality of digital certificate processing apparatuses (20) and the at least one second connection with the at least one mining pool includes:
establishing a first connection with one of the plurality of digital certificate processing apparatuses (20) and the at least one second connection with the at least one mining pool according to the computation power of said one digital certificate processing apparatuses (20).

5. An apparatus (10) for relaying digital certificate processing tasks, the apparatus (10) comprising:
a connection module (1) configured to establish a plurality of first connections with a plurality of digital certificate processing apparatuses (20) and at least one second connection with at least one mining pool;
an acquisition module (2, 22) configured to obtain the digital certificate processing tasks from the at least one mining pool through the at least one second connection; and
an assignment module (3) configured to assign the digital certificate processing tasks to the plurality of digital certificate processing apparatuses (20) through the plurality of first connections,
wherein the number of the at least one second connection is smaller than the number of the first connections.

6. The apparatus (10) of claim 5, further comprising:
a division module (4) configured to divide a content and a difficulty level of the digital certificate processing task according to computation power of each of the plurality of digital certificate processing apparatuses (20).

7. The apparatus (10) of claim 6, further comprising:
a determination module (5) configured to determine the computation power of each of the plurality of digital certificate processing apparatuses (20) according to a theoretical difficulty level of a given digital certificate processing task to be assigned to the plurality of digital certificate processing apparatuses (20) and a time interval of receiving answers to the given digital certificate processing task.

8. The apparatus (10) of claim 5, wherein the connection module (1) is further configured to:
establish a first connection with one of the plurality of digital certificate processing apparatuses (20) and the at least one second connection with the at least one mining pool according to the computation power of said one digital certificate processing apparatus (10, 20).

9. The apparatus (10) of any one of claims 5 to 8, wherein the apparatus (10) includes a cloud server.

10. A computer program product comprising a computer program stored on a computer-readable storage medium, the computer program including program instructions that, when the program instructions are executed by a computer, causes the computer to execute the method of any one of claims 1 to 5.

## Patentansprüche

1. Verfahren, das von einer Vorrichtung zum Weiterleiten von digitalen Zertifikatverarbeitungsaufgaben durchgeführt wird, umfassend:
Herstellen einer Vielzahl von ersten Verbindungen mit einer Vielzahl von digitalen Zertifikatverarbeitungsvorrichtungen (20) und mindestens einer zweiten Verbindung mit mindestens einem Mining-Pool;
Erhalten einer Vielzahl von digitalen Zertifikatverarbeitungsaufgaben von dem mindestens einen Mining-Pool über die mindestens eine zweite Verbindung; und
Zuweisen der erhaltenen digitalen Zertifikatverarbeitungsaufgaben zu der Vielzahl von digitalen Zertifikatverarbeitungsvorrichtungen (20) über die ersten Verbindungen;
wobei die Anzahl der mindestens einen zweiten Verbindung kleiner als die Anzahl der ersten Verbindungen ist.

2. Verfahren nach Anspruch 1, ferner umfassend, vor dem Zuweisen der digitalen Zertifikatverarbeitungsaufgaben zu der Vielzahl von digitalen Zertifikatverarbeitungsvorrichtungen (20) über die ersten Verbindungen:
Identifizieren eines Inhalts und eines Schwierigkeitsgrads einer gegebenen digitalen Zertifikatverarbeitungsaufgabe gemäß der Rechenleistung jeder der Vielzahl von digitalen Zertifikatverarbeitungsvorrichtungen (20).

3. Verfahren nach Anspruch 2, ferner umfassend:
Bestimmen der Rechenleistung jeder der Vielzahl von digitalen Zertifikatverarbeitungsvorrichtungen (20) gemäß einem theoretischen Schwierigkeitsgrad einer gegebenen digitalen Zertifikatverarbeitungsaufgabe, die der Vielzahl von digitalen Zertifikatverarbeitungsvorrichtungen (20) zugewiesen werden soll, und einem Zeitintervall des Empfangens von Antworten auf die gegebene digitale Zertifikatverarbeitungsaufgabe.

4. Verfahren nach Anspruch 1, wobei das Herstellen der ersten Verbindungen mit der Vielzahl von digitalen Zertifikatverarbeitungsvorrichtungen (20) und der mindestens einen zweiten Verbindung mit dem mindestens einen Mining-Pool Folgendes beinhaltet:
Herstellen einer ersten Verbindung mit einer der Vielzahl von digitalen Zertifikatverarbeitungsvorrichtungen (20) und der mindestens einen zweiten Verbindung mit dem mindestens einen Mining-Pool gemäß der Rechenleistung der einen digitalen Zertifikatverarbeitungsvorrichtung (20).

5. Vorrichtung (10) zum Weiterleiten von digitalen Zertifikatverarbeitungsaufgaben, wobei die Vorrichtung (10) Folgendes umfasst:
ein Verbindungsmodul (1), das konfiguriert ist, um eine Vielzahl von ersten Verbindungen mit einer Vielzahl von digitalen Zertifikatverarbeitungsvorrichtungen (20) und mindestens eine zweite Verbindung mit mindestens einem Mining-Pool herzustellen;
ein Erfassungsmodul (2, 22), das konfiguriert ist, um die digitalen Zertifikatverarbeitungsaufgaben von dem mindestens einen Mining-Pool über die mindestens eine zweite Verbindung zu erhalten; und
ein Zuweisungsmodul (3), das konfiguriert ist, um die digitalen Zertifikatverarbeitungsaufgaben der Vielzahl von digitalen Zertifikatverarbeitungsvorrichtungen (20) über die Vielzahl von ersten Verbindungen zuzuweisen,
wobei die Anzahl der mindestens einen zweiten Verbindung kleiner als die Anzahl der ersten Verbindungen ist.

6. Vorrichtung (10) nach Anspruch 5, ferner umfassend:
ein Teilungsmodul (4), das konfiguriert ist, um einen Inhalt und einen Schwierigkeitsgrad der digitalen Zertifikatverarbeitungsaufgabe gemäß der Rechenleistung jeder der Vielzahl von digitalen Zertifikatverarbeitungsvorrichtungen (20) zu teilen.

7. Vorrichtung (10) nach Anspruch 6, ferner umfassend:
ein Bestimmungsmodul (5), das konfiguriert ist, um die Rechenleistung jeder der Vielzahl von digitalen Zertifikatverarbeitungsvorrichtungen (20) gemäß einem theoretischen Schwierigkeitsgrad einer gegebenen digitalen Zertifikatverarbeitungsaufgabe, die der Vielzahl von digitalen Zertifikatverarbeitungsvorrichtungen (20) zugewiesen werden soll, und einem Zeitintervall des Empfangens von Antworten auf die gegebene digitale Zertifikatverarbeitungsaufgabe zu bestimmen.

8. Vorrichtung (10) nach Anspruch 5, wobei das Verbindungsmodul (1) ferner konfiguriert ist, um:
eine erste Verbindung mit einer der Vielzahl von digitalen Zertifikatverarbeitungsvorrichtungen (20) und die mindestens eine zweite Verbindung mit dem mindestens einen Mining-Pool gemäß der Rechenleistung der einen digitalen Zertifikatverarbeitungsvorrichtung (10, 20) herzustellen.

9. Vorrichtung (10) nach einem der Ansprüche 5 bis 8, wobei die Vorrichtung (10) einen Cloud-Server beinhaltet.

10. Computerprogrammprodukt, umfassend ein Computerprogramm, das auf einem computerlesbaren Speichermedium gespeichert ist, wobei das Computerprogramm Programmanweisungen beinhaltet, die, wenn die Programmanweisungen von einem Computer ausgeführt werden, den Computer veranlassen, das Verfahren nach einem der Ansprüche 1 bis 5 auszuführen.

## Revendications

1. Procédé réalisé par un appareil pour relayer des tâches de traitement de certificats numériques comprenant :
l'établissement d'une pluralité de premières connexions avec une pluralité d'appareils de traitement de certificats numériques (20) et d'au moins une deuxième connexion avec au moins un pool de minage ;
l'obtention d'une pluralité de tâches de traitement de certificats numériques provenant du au moins un pool de minage par l'intermédiaire de l'au moins une deuxième connexion ; et
l'attribution des tâches de traitement de certificats numériques obtenues à la pluralité d'appareils de traitement de certificats numériques (20) par l'intermédiaire des premières connexions ;
dans lequel le nombre de l'au moins une deuxième connexion est inférieur au nombre des premières connexions.

2. Procédé selon la revendication 1, comprenant en outre, avant l'attribution des tâches de traitement de certificats numériques à la pluralité d'appareils de traitement de certificats numériques (20) par l'intermédiaire des premières connexions :
l'identification d'un contenu et d'un niveau de difficulté d'une tâche de traitement de certificats numériques donnée en fonction de la puissance de calcul de chacun de la pluralité d'appareils de traitement de certificats numériques (20).

3. Procédé selon la revendication 2, comprenant en outre :
la détermination de la puissance de calcul de chacun de la pluralité d'appareils de traitement de certificats numériques (20) en fonction d'un niveau de difficulté théorique d'une tâche de traitement de certificats numériques donnée à attribuer à la pluralité d'appareils de traitement de certificats numériques (20) et d'un intervalle de temps de réception de réponses à la tâche de traitement de certificats numériques donnée.

4. Procédé selon la revendication 1, dans lequel l'établissement des premières connexions avec la pluralité d'appareils de traitement de certificats numériques (20) et de l'au moins une deuxième connexion avec le au moins un pool de minage comprend :
l'établissement d'une première connexion avec l'un de la pluralité d'appareils de traitement de certificats numériques (20) et de l'au moins une deuxième connexion avec le au moins un pool de minage en fonction de la puissance de calcul dudit un appareil de traitement de certificats numériques (20).

5. Appareil (10) pour relayer des tâches de traitement de certificats numériques, l'appareil (10) comprenant :
un module de connexion (1) configuré pour établir une pluralité de premières connexions avec une pluralité d'appareils de traitement de certificats numériques (20) et au moins une deuxième connexion avec au moins un pool de minage ;
un module d'acquisition (2, 22) configuré pour obtenir les tâches de traitement de certificats numériques provenant du au moins un pool de minage par l'intermédiaire de l'au moins une deuxième connexion ; et
un module d'attribution (3) configuré pour attribuer les tâches de traitement de certificats numériques à la pluralité d'appareils de traitement de certificats numériques (20) par l'intermédiaire de la pluralité de premières connexions,
dans lequel le nombre de l'au moins une deuxième connexion est inférieur au nombre des premières connexions.

6. Appareil (10) selon la revendication 5, comprenant en outre :
un module de division (4) configuré pour diviser un contenu et un niveau de difficulté de la tâche de traitement de certificats numériques en fonction de la puissance de calcul de chacun de la pluralité d'appareils de traitement de certificats numériques (20).

7. Appareil (10) selon la revendication 6, comprenant en outre :
un module de détermination (5) configuré pour déterminer la puissance de calcul de chacun de la pluralité d'appareils de traitement de certificats numériques (20) en fonction d'un niveau de difficulté théorique d'une tâche de traitement de certificats numériques donnée à attribuer à la pluralité d'appareils de traitement de certificats numériques (20) et d'un intervalle de temps de réception de réponses à la tâche de traitement de certificats numériques donnée.

8. Appareil (10) selon la revendication 5, dans lequel le module de connexion (1) est en outre configuré pour :
établir une première connexion avec l'un de la pluralité d'appareils de traitement de certificats numériques (20) et l'au moins une deuxième connexion avec le au moins un pool de minage en fonction de la puissance de calcul dudit un appareil de traitement de certificats numériques (10, 20).

9. Appareil (10) selon l'une quelconque des revendications 5 à 8, dans lequel l'appareil (10) comprend un serveur en nuage.

10. Produit de programme informatique comprenant un programme informatique stocké sur un support de stockage lisible par ordinateur, le programme informatique comprenant des instructions de programme qui, lorsque les instructions de programme sont exécutées par un ordinateur, amènent l'ordinateur à exécuter le procédé selon l'une quelconque des revendications 1 à 5.
